# EUROPEAN PATENT APPLICATION

(11) **EP 2 128 867 A1**
(43) Date of publication of application: **02.12.2009**
(21) Application number: 08009754.6
(22) Date of filing: 28.05.2008
(51) Int. Cl.: G11B 20/00, G06F 21/00, G11B 27/11

(54) **Method for controlling access to content on data carrier**

(71) Applicant: Sony DADC Austria AG, 5081 Anif (AT)
(72) Inventor: Wiesinger, Bernhard, 5020 Salzburg (AT)
(74) Representative: Müller - Hoffmann & Partner

(57) **Abstract**

A method for controlling access to content on a data carrier includes reading a first and a second machine readable key stored on the data carrier. Further, a third key is retrieved from a remote server based on the first key. Access to the content on the data carrier is allowed only if the second key matches the third key.

## Description

An embodiment of the invention relates to a method for controlling access to content on a data carrier. Further embodiments relate to a system, a data carrier and a computer program product for controlling access to content on a data carrier.

### BACKGROUND

Nowadays, software and multimedia files are often distributed on data carriers such as optical storage media or memory sticks. In recent years, especially the market for low-price applications and promotional applications distributed on data carriers has increased.

Since most data carriers may easily be copied by use of a conventional personal computer, access control and digital rights management have become an important issue.

It is therefore an object of the invention to provide a method for controlling access to data carriers, which method achieves a desired level of security.

This object is solved by a method according to claim 1, by a system according to claim 13, by a data carrier according to claim 14 and by a computer program product according to claim 15.

Further objects and possible advantages of the invention will become apparent from consideration of the drawings and the ensuing description.

### BRIEF DESCRIPTION OF THE SERVERAL VIEWS OF THE DRAWINGS

The accompanying drawings are included to provide a further understanding of embodiments. The drawings illustrate embodiments and together with the description serve to explain principles of embodiments. The elements of the drawings are not necessarily to scale relative to each other. Like reference numerals designate corresponding similar parts.
Fig. 1 is a block diagram illustrating one embodiment of a method for controlling access to content on a data carrier.
Fig. 2 is a flowchart illustrating one embodiment of the method.
Fig. 3 is a flowchart illustrating a further embodiment of the method.
Fig. 4 illustrates a dialog box which may be used for user communication when performing an embodiment of the method.
Fig. 5 illustrates another dialog box for user communication when performing the method.
Fig. 6 illustrates still another dialog box for user communication when performing the method.
Fig. 7 illustrates a sequence of messages exchanged between a client and a server when performing an embodiment of the method.
Fig. 8 illustrates an embodiment of a system for controlling access to content on a data carrier.
Fig. 9 illustrates a further embodiment of the system.
Fig. 10 illustrates a look-up table which may be used in an embodiment of the system.
Fig. 11 illustrates a data carrier supporting the method.
Fig. 12 illustrates an embodiment of the production process of data carriers supporting the method.

### DETAILED DESCRIPTION

In the following, embodiments of the invention are described. It is important to note, that all embodiments may be combined in any way, i.e. there is no limitation that certain described embodiments may not be combined with others. It is further to be understood that the features of the various embodiments described herein may be combined with each other, unless specifically noted otherwise. Further, other embodiments may be utilized and structural and logical changes may be made without departing from the scope of the present invention. The following detailed description, therefore, is not to be taken in a limiting sense, and the scope of the present invention is defined by the appended claims.

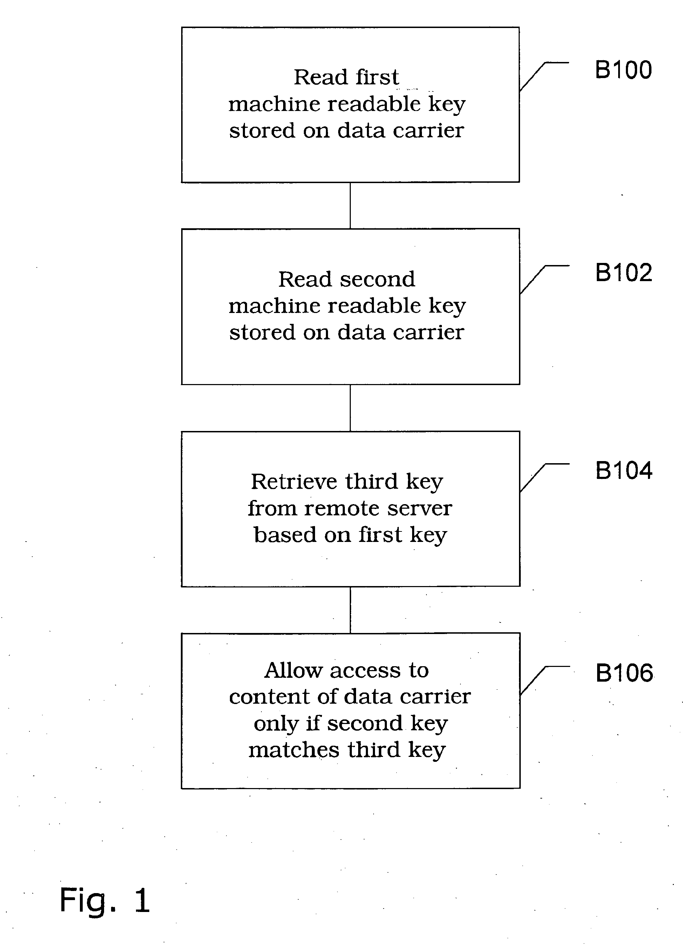

Fig. 1 is a block diagram illustrating one embodiment of a method for controlling access to content on a data carrier. At block B100. a first machine readable key stored on the data carrier is read. A second machine readable key stored on the data carrier is read at B102. Based on the first key, a third key is retrieved from a remote server at B104. At B106, access to content on the data carrier is allowed only if the second key matches the third key.

The data carrier may be any item suitable for storing content. The data carrier may be, for example, a compact disc such as a CD-ROM, a CD-R or a CD-RW, a digital versatile disc (DVD) such as a DVD-R, a DVD+R, a DVD-RAM, a DVD-RW, a DVD+RW or a Blu-ray disc (BD) or the like. The data carrier may also be a semiconductor memory device.

The content may include digital data, for example belonging to software products, such computer games or office applications, media or multimedia files including audio and/or video data, text data or the like.

In addition to the content, the data carrier may include data supporting the method of controlling access to content on the data carrier, such as computer program instructions which, when loaded into a processor, cause a computer to execute parts of the method for controlling access to content of the data carrier.

Further, the data carrier may include the first and second key, which may also be referred to as request key and verification key, respectively. Both keys may be stored on the data carrier in a machine readable format, which format may be automatically read by a reading device. Both keys may include numerical or alphanumerical sequences or codes and may be stored as binary data. The storing of the keys in machine readable format avoids that the user needs to input any kind of keys by hand which is cumbersome and error prone.

The request key may be stored in such a way that it can be read by a conventional reading device using standard software for reading and displaying content to a user. The verification key, however, may be stored such that it cannot be accessed by or displayed to a user using standard software and a conventional reading device. In other words, the second key (verification key) may be hidden, concealed, or inaccessible for the user, whereby security of the method is enhanced.

At B104, the third key, also referred to as activation key, is retrieved from a remote server on the basis of the first key. The server may be remotely located, offering centralized services for a plurality of users.

For retrieving the activation key, the server may be accessed via a network such as the internet, a local network, a telephone network, a mobile communication network or the like. The server may also be connected via other connection services such as, for example, postal services.

The server may include a host computer running a web application, an SMS service or an automatic voice recognition telephone service. The server may also include a call center in which employees are executing activation orders.

For retrieving the activation key, the request key may be transmitted to the server. Then the activation key may be retrieved from the server. For this purpose, the server may transmit the activation key via a network, e.g. of one of the above-mentioned types. The network for retrieving the activation key may differ from the network over which the request key has been sent. For example, it is possible that the activation key is sent via email if a request via telephone has been received.

The activation key may include numerical or alphanumerical sequences or codes and may be stored as binary data.

At B106, it is checked whether the verification key has a predetermined relationship with the activation key, i. e. if it matches the activation key. Access to the content of the data carrier is allowed only if the predetermined relationship is fulfilled, i. e. if the verification key matches the activation key.

For this purpose, it may for example be checked if the activation key is equal to the verification key. Alternatively, it may be checked if the predetermined relationship between activation key and verification key holds. For example, it may be verified if a numerical equation based on activation key and verification key holds. Further, the activation key may have been encrypted by the remote server before retrieval, such that before matching activation key and verification key, further decryption may be necessary.

In the above described embodiment of the method, the activation key may only depend on the data carrier or data stored on it. It may consequently be independent of hardware components, e. g. of a user's device. In this case, the activation key may be considered as hardware independent and can be used with different hardware devices without any problem. Further, the fact that no hardware identification numbers are to be considered when performing the method allows cheap and simple operation, achieving however a good-enough security level, suitable e. g. for low- or mid-price and promotional applications.

Further, as mentioned, since request key and verification key are both stored on the data carrier in a machine readable format, no manual entering of any of the keys by a user may be necessary. This also holds for retrieving the activation key, as far as automatic communication with the remote server may be established via a network. The automatic exchange of keys may considerably facilitate content access for the user, since no complicated or lengthy sequence of characters has to be entered.

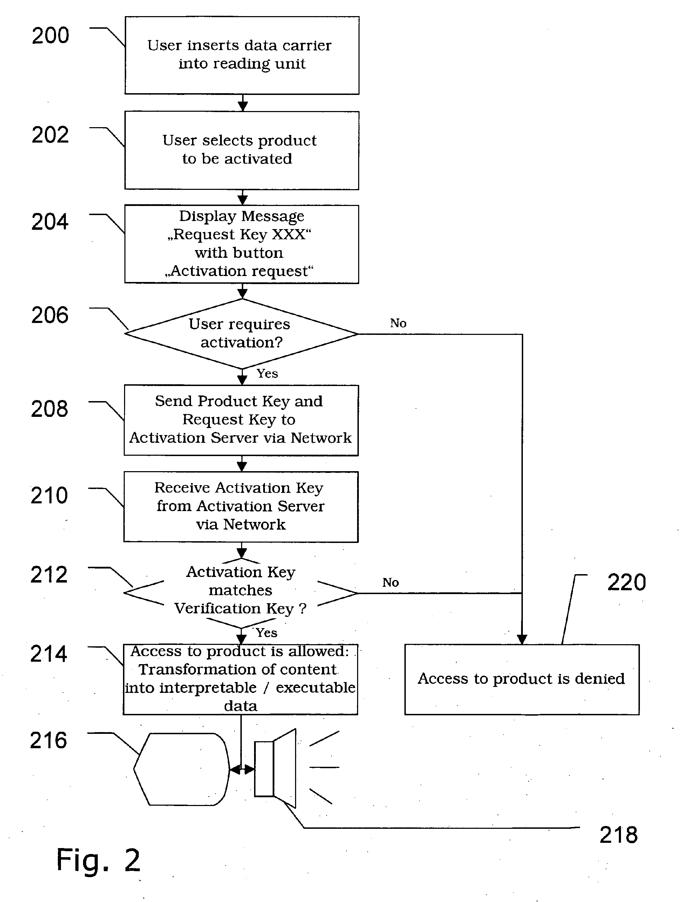

In Fig. 2, a further embodiment of the method for controlling content access is illustrated by use of a flowchart. At 200, a user inserts the data carrier into a reading unit such as a conventional reading device connected to a personal computer.

An overview on products included in the content of the data carrier may then be displayed to the user at 202. The user may then select one or more products which he desires to be activated, e.g. by an input device.

Following this selection of products to be activated, a message may be displayed as illustrated at 204. The message may indicate the request key, and a button may be included, allowing requesting activation by selection with the input device.

If the user requests activation at 206, one or more product keys associated with the products selected by the user at 202 may be sent together with the request key to an activation server via a network, as illustrated at 208.

As a response to this request, the activation key may then be received from the activation server via network, as illustrated at 210. The request key may be determined such that it is only valid for activating the selected products. It may, for example, be possible to encode the product keys related to the products to be activated within the activation key.

At 212, it is checked if the activation key received from the activation server matches the verification key stored on the data carrier. Before matching, product keys that may have been encoded with the activation key may be extracted.

If the activation key matches the verification key, access to the selected products is allowed, as shown at 214. For allowing access to one of the products, the related content stored on the data carrier may be transformed into interpretable and/or executable data.

If the selected product is a software product, such as a computer game, a multimedia application, an office application or the like, it may be accessed on the data carrier, loaded to a processor and executed on a user's device. If the selected product includes multimedia data files, such as audio or video data files, they may be rendered on the user's device. This is illustrated with display 216 and loudspeaker 218.

If, however, the user does not require activation at 206, or if the activation key received from the activation server does not match the verification key at 212, access to the selected products stored on the data carrier is denied, as illustrated at 220. Consequently, it may neither be possible to interpret or execute the content of data carrier on the user's device, nor to access or to store it in a storage different from the data carrier.

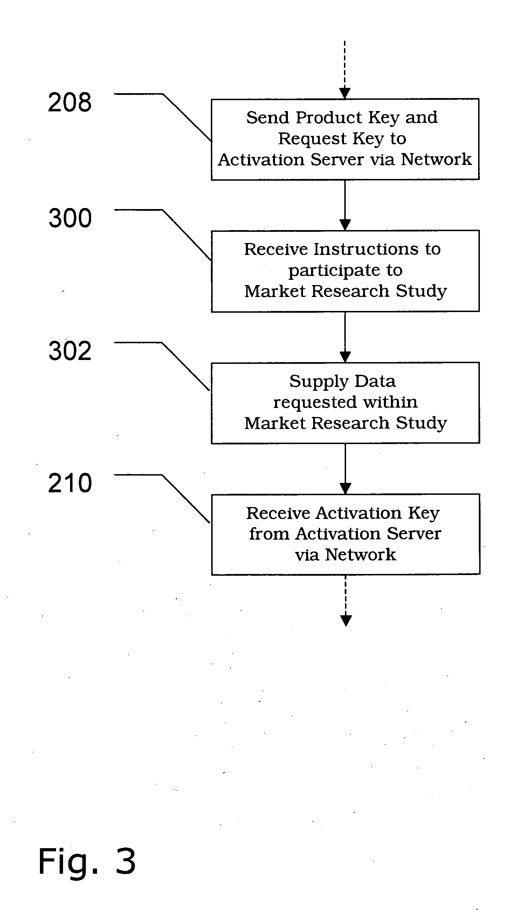

Fig. 3 illustrates a further embodiment of the method illustrated in Fig. 2, in which after having sent the product key and the request key to the activation server via network, additional information is requested by the activation server as a prerequisite for retrieving the activation key.

In Fig. 3, it is to be assumed that steps 200, 202 and 204 have been performed by the user, and that the user has required activation at 206. As a consequence, the product key and the request key are sent to the activation server via network at 208 in Fig. 3.

Upon this request, as shown at 300, the activation server requires further information as a precondition for retrieving the activation key. In this embodiment, the user receives instructions to participate to a market research study.

At 302, the user inputs the data requested for the market research study.

As a result, at 210, the user receives the activation key from the activation server via the network. The further procedure of activation may then be performed as illustrated in Fig. 2 in steps 212, 214 and 220.

The additional information requested as a prerequisite for retrieving the activation key may comprise various data that may be of interest, e. g. for marketing purposes. It may include, for example, personal data such as name, telephone number or email address, allowing entering in contact with the user. Further, information concerning the user's personal tastes, needs and/or interests may be required that may be valuable for further product or market development. Alternatively or in addition, the additional information may include proofs of payment, credit card data or account data if a payment is required for a product activation.

It is further possible that the additional information required by the activation server is not to be sent directly to the activation server. Instead, the data may be supplied to a different server, which, as a consequence of receiving the information, sends data proving the reception to the user. This proof of reception may then be accepted as additional information by the activation server. In the embodiment illustrated in Fig. 3, the server supporting the market research study may hence differ from the activation server. This allows to keep the activation server simple and to operate it at low operational costs, e. g. as a web server running a web application.

In case that for different products included to the content of the data carrier, different kinds of information are required as a prerequisite for retrieving the activation key, the user may decide which product to active in view of the information that is to be supplied. He or she may, for example, decide whether to activate a full version of a software product after having a supplied a proof of payment of its price, or of activating the trial version for which only an email registration is required.

For attracting the interest of the user, it may further be possible that a part of the content of the data may be stored in an accessible, e.g. interpretable or executable, format. For example, the data carrier could contain some music to which the user may listen without requesting the activation key. The user can thereby be encouraged to provide additional data, e. g. personal data for marketing purposes, for getting access to further music data stored on the data carrier in a format which may not be accessible without the activation key.

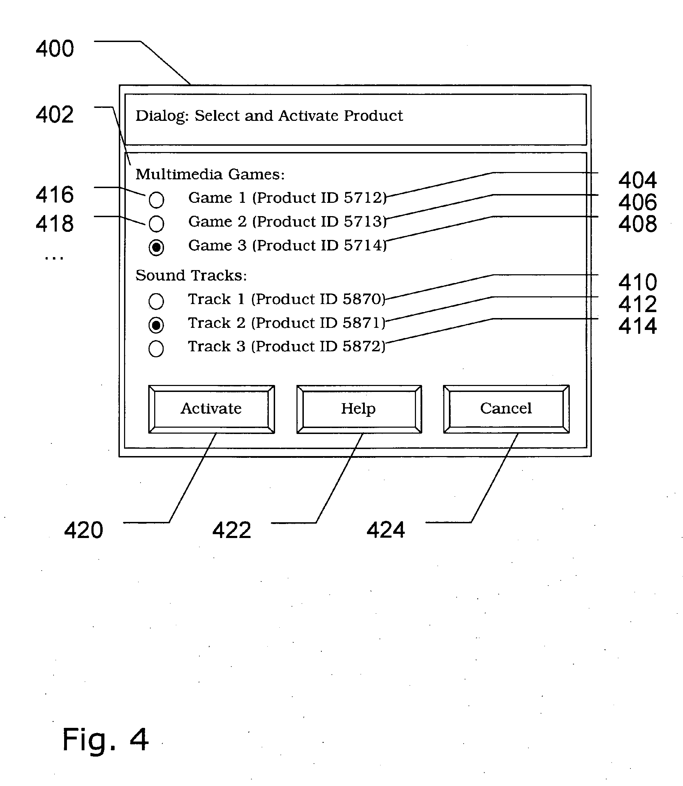

Fig. 4 illustrates a dialog box 400 which may support product selection at 206 in Fig. 2.

In the descriptive part 402 of dialog box 400, an overview on the content of the data carrier may be given. In the example, three multimedia games 404, 406, and 408 and three soundtracks 410, 412 and 414 with related product IDs are listed and may be selected with select buttons 416, 418, ... by the user with an input device (not shown). After having completed product selection, the user may continue the dialog by selecting an activate button 420, a help button 422, or a cancel button 424.

Upon selection of the activate button 420, product activation may be continued as illustrated in Fig. 2 at 206 and following.

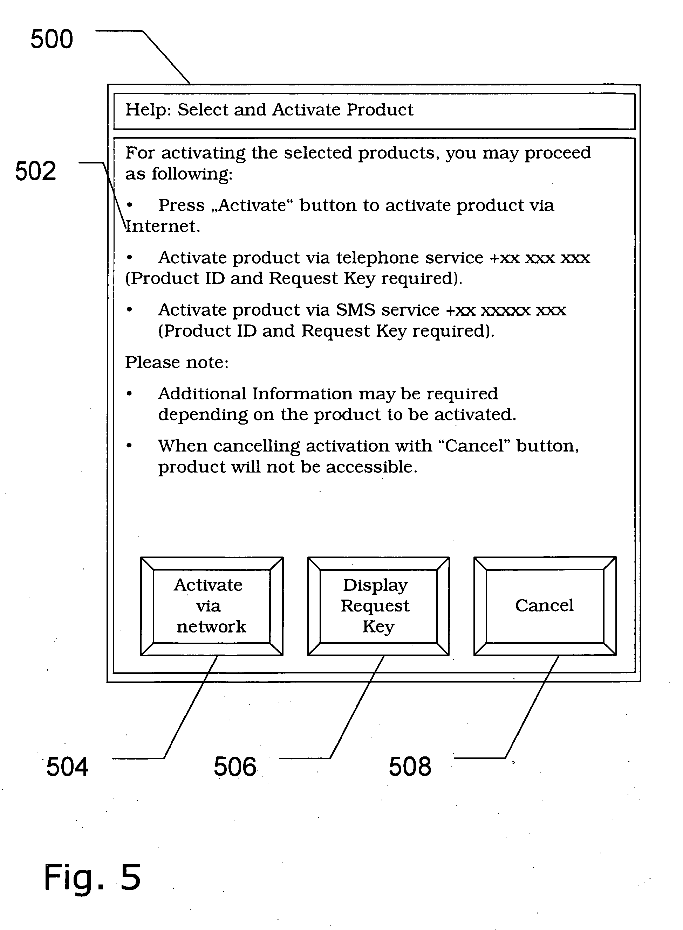

Upon selection of the help button 422, additional information for supporting the user when performing product activation may be displayed. For this purpose, a dialog box as illustrated in Fig. 5 may be used.

In Fig. 5, a help dialog box 500 with supporting information for product activation is displayed, which may support the user when performing an embodiment of the method. In the descriptive part 502 of the help dialog box 500, several alternatives for product activation are described.

Firstly, it is described to active products via internet by selecting an "activate via network" button 504. If "activate via network" button 504 is selected and the internet is accessible from the user's device, the activation server may be contacted directly and without any further user interference. All necessary information may directly be transferred via internet, such as the request key and the product keys related to the products to be activated. Consequently, any need for manual entry of the keys by the user may be avoided.

As a further possibility for product activation, activation via telephone is mentioned in the descriptive part 502 of help dialog box 500. As a basis for activation via telephone, the product IDs of the products to be activated as well as the request key may be required. To get access to the request key, the user may select a "display request key" button 506. The telephone service may be provided by an automatic speech recognition system to which the keys may be supplied by oral communication or by pressing the respective keys of the telephone. Further, a call center service may be provided, i.e. for allowing a better user support or for acquiring further information. The activation key may be communicated via telephone or sent via network, e. g. by email.

Alternatively, product activation via a push protocol, such as SMS (short message service) or WAP-push is offered in the descriptive part 502 of help dialog box 500. For product activation via SMS, the request key and the product keys of the products to be activated may be supplied to the activation server via SMS. The activation server may then reply by sending a corresponding activation key, e. g. by SMS or email.

If the user decides not to activate the products, e.g. for taking payment arrangements before activating, he or she may select a "cancel" button 508.

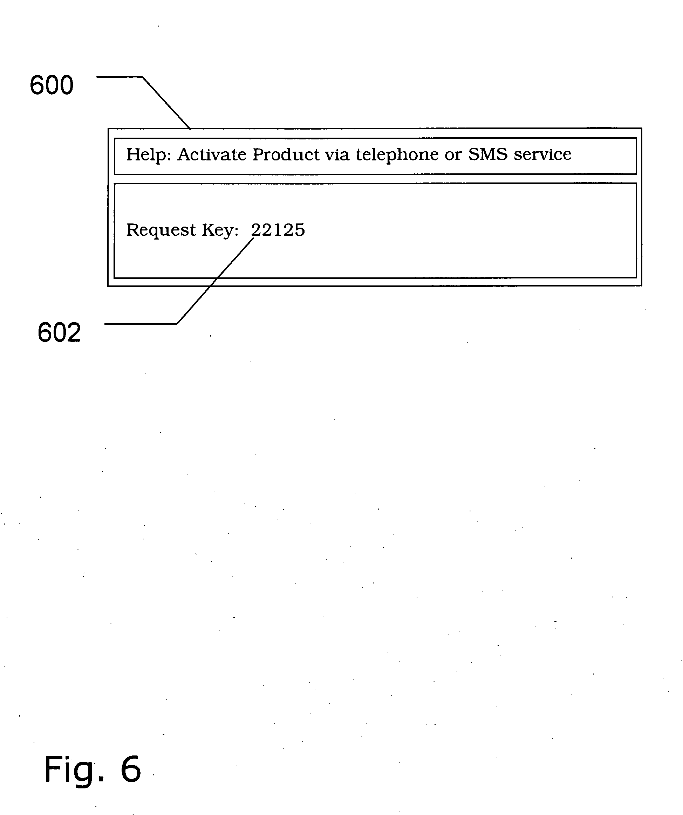

Fig. 6 illustrates a second help dialog box 600, displaying the request key stored on the data carrier. The request key 602 may for example be used for product activation via telephone or SMS service.

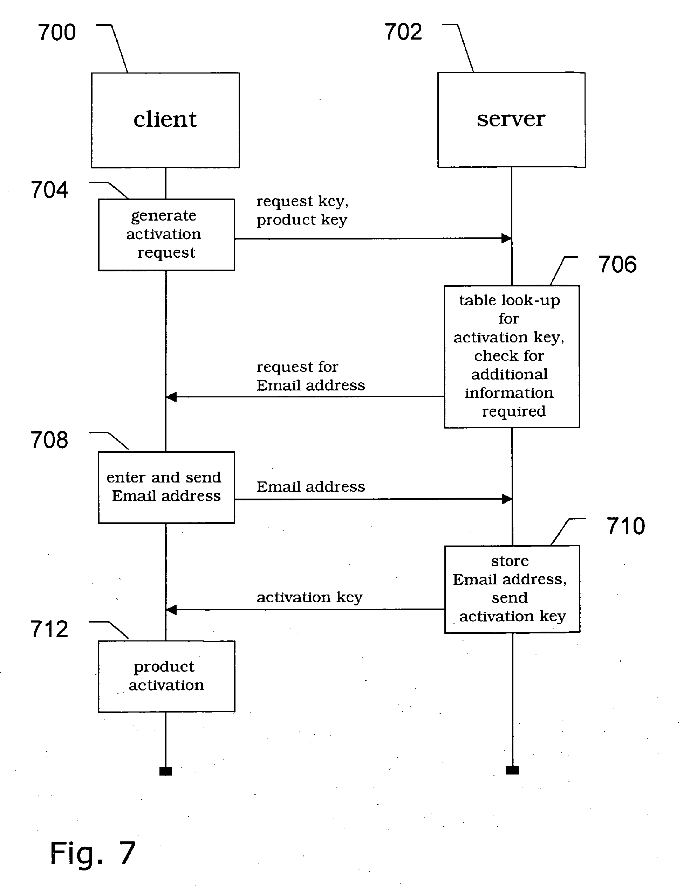

Fig. 7 illustrates a sequence of messages that may be exchanged between a client 700 and a server 702 when performing an embodiment of the method for controlling content access.

At 704, client 700 generates an activation request. The activation request may be based on the user's selection of a product key and the request key, which are both sent to server 702.

Upon reception of the request key and the product key, server 702 performs a table look-up 706 for determining the corresponding activation key. Additionally, server 702 checks at 706 if any additional information is to be required for activating the product related to the request key and product identification key. In the case illustrated in Fig. 7, as a prerequisite for product activation, the email address of the user is requested, e.g. for marketing purposes.

After having received the request, the user enters and sends his or her email address at 708.

Upon reception of the required address, server 702 stores the email address and sends the activation key to client 700 at 710. For verifying correctness of the email address, server 702 may also use the email address as destination for sending the activation key. Thus, activation may only be possible if a correct e-mail address has been input by the user. This way, the quality of the collected data for marketing or other purposes may be increased.

Provided with the activation key, client 700 may then activate the product identified by the product identification number, as illustrated as 712.

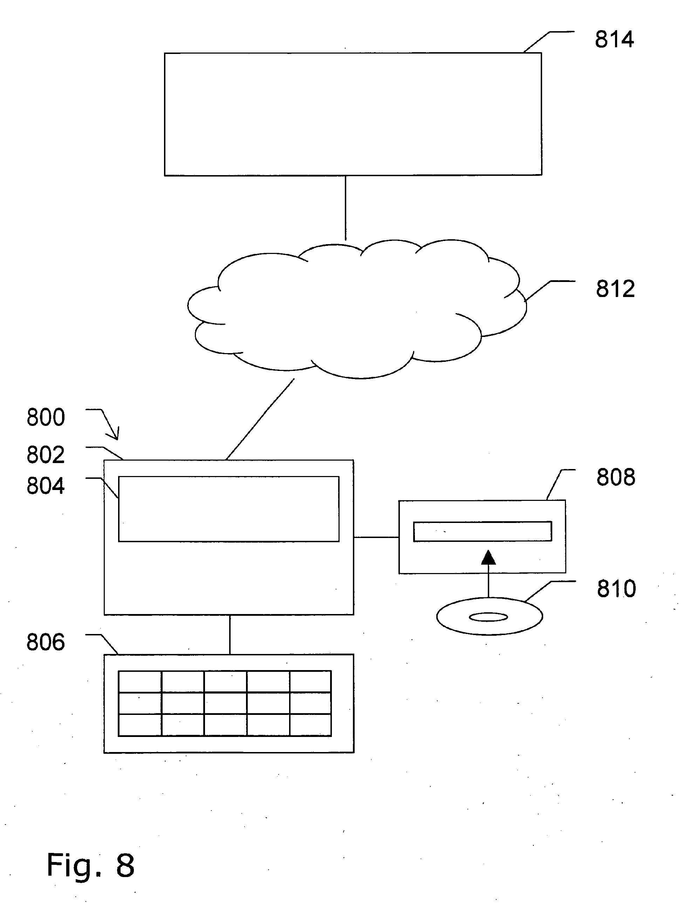

Fig. 8 illustrates an embodiment of a system for controlling access to the content of the data carrier.

A client 800 includes a processing device 802 supplied with a display device 804, e.g. a display or monitor. Further, an input device 806 is connected to the processing device, for example a keyboard and/or a pointing device. Additionally, a reading device 808 configured to read data stored on a data carrier 810 is connected. Further, client 800 may be connectible via a network 812 such as the internet to a server 814.

Data carrier 810 may have arbitrary formats and may be, for example, a compact disc such as a CD-ROM, a CD-R or a CD-RW, a digital versatile disc (DVD) such as a DVD-R, a DVD+R, a DVD-RAM, a DVD-RW, a DVD+RW or a blu-ray disc (BD) or the like.

Further, data carrier 810 may allow restricted access to its content, as described in the above. In other words, the content stored on data carrier 810 may not be read, interpreted or executed directly if it has not been activated by use of the activation key.

In addition to the content, data carrier 810 may include data supporting the method of controlling access to its content, as described in the above. Such data may include a software program or computer program instructions, which, when loaded into processing device 802, cause processing device 802 to execute the above-mentioned method for controlling access to the content of data carrier 810. Alternatively, no data supporting the method may be provided on the data carrier. In this case, suitable software may for example be loaded into processing device 802 via network 812.

When data carrier 810 is inserted to reading device 808, client 800 may provide an overview on the content of data carrier 810 by displaying included products on display device 804. By use of input device 806, the user may then select the products to be activated.

Upon activation request, processing device 802 may open a connection to network 812 and may send the request key read by reading device 808 from data carrier 810 over network 812 to server 814, requesting retrieval of the activation key. Further information may be supplied in a dialog over network 812 by client 800, for example the product keys of the products to be activated, or personal information concerning the user.

Upon reception of the request key and further information, server 814 may determine the activation key, e. g. by performing a table look-up, a data base request, or the like. Server 814 may then send the activation key via network 812 to client 800.

Upon reception of the activation key, processing device 802 may request the verification key to be read from data carrier 810 by reading device 808. Processing device 802 may then check if the activation key received via network 812 matches the verification key read from data carrier 810, and may allow access to the content of data carrier 810, e.g. the product to be activated.

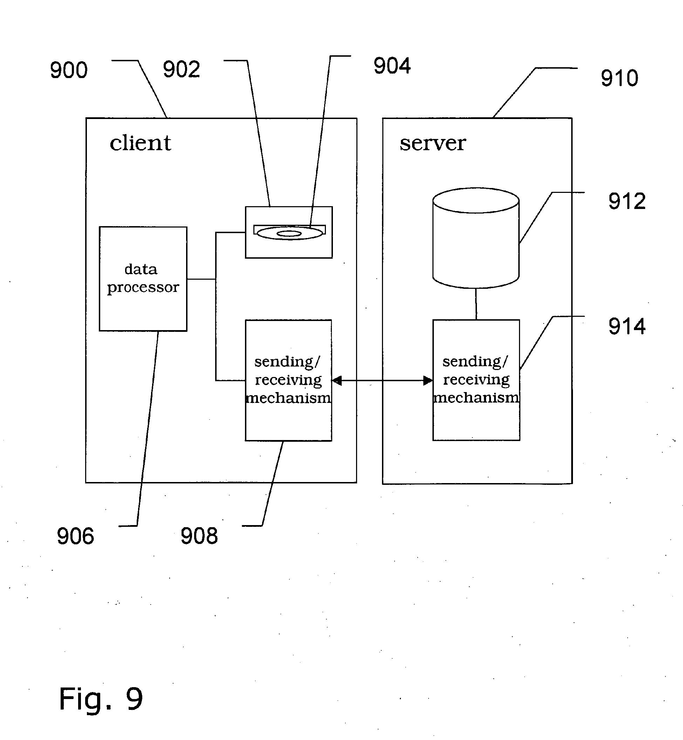

Fig. 9 further illustrates components of a further embodiment of a system for controlling content access.

A client 900 may include a reading mechanism manner configured to read the data carrier 904. Further, client 900 includes a processor 906 and a sending/receiving mechanism 908, the latter enabling communication with a server 910.

Server 910 may include a sending/receiving mechanism 914 for establishing communication with client 900. Further, server 910 may include a storage device configured to store information assigning the request key with the activation key.

When data carrier 904 is input into reading mechanism 902, processor 906 may load computer program instructions from data carrier 904. The computer program instructions may initiate reading of the request key by reading mechanism 902. The request key may then be sent by sending/receiving mechanism 908 to sending/receiving mechanism 914 of server 910.

Server 910 may then retrieve the activation key associated with the request key from data storage 912, e. g. by performing a table look-up in a look-up table, by performing a data base request, or by associating the activation key via web programming.

The activation key may then be sent from server 910 by sending/receiving mechanism 915 to client 900 receiving the activation key via sending/receiving mechanism 908.

Processor 906 may then check if the verification key read from data carrier 904 by reading mechanism 902 matches the activation key. The check may be supported by the computer program instructions loaded from data carrier 904. In accordance with the result of matching, processor 906 may allow or deny access to content stored on data carrier 904 via reading mechanism 902.

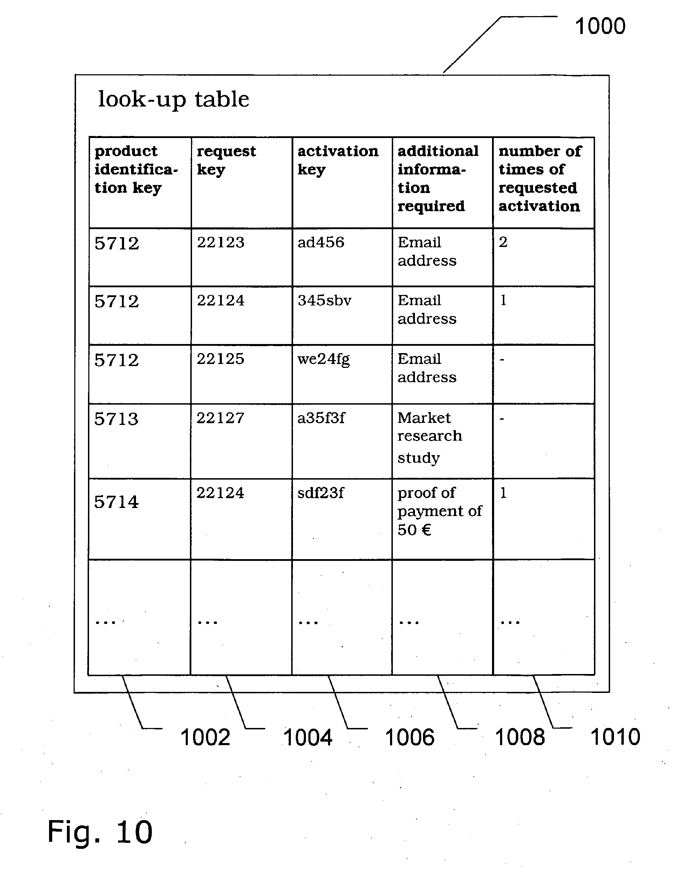

In Fig. 10, an embodiment of a look-up table 1000 is illustrated, which may be stored by server 910, e.g. in data storage 912. In look-up table 1000, the request key and the activation key may be uniquely assigned to each other.

Look-up table 1000 may be realized as a table in an arbitrary format, e.g. a data base format, a spreadsheet format, a web programming format or an arbitrary file format. A simple structure of the look-up table allows operating the method with low operational costs.

Look-up table 1000 may include several columns. A product column 1002 may be included for storing the product key. Further, a request column 1004 may be included for storing the request key, e.g. in association with the product key. Still further, an activation column 1006 may be included for storing the activation key, which may be associated with the request key and the product identification key. As a further column, an information column 1008 may be included, in which it may be described which kind of additional information is to be requested before sending the activation key, depending on request key and product key. Further, a control column 1010 may be included, in which for each request key, the number of times of requested activation is stored. The number of times of requested activation may also be stored in association with the product key for which activation has been required.

The server may control the number of times that an activation key may be retrieved on the basis of a single request key, e.g. by prohibiting retrieval of the activation key if a predetermined threshold is reached. In the embodiment illustrated in Fig. 10, request key 22123 in relation with production identification key 5712 has already been activated twice, as stored in the first data row of look-up table 1000. If, for example, the number of activations has been limited to three, only one further retrieval of activation key ad456 may be possible.

Consequently, the number of times a product stored on data carrier 904 may be activated may be controlled by server 910. Thus, if data carrier 904 or a copy of it is used several times for product activation, the number of times the activation may be carried out can be limited. This may help to prevent unauthorized usage of the content of data carrier 904, enabling copy protection for data carriers which may easily be copied by conventional reading devices.

In an alternative embodiment, control column 1010 may not be used for limiting the number of times of requested activation. This may be useful if the number of activation is not to be restricted. It may, for example, be desirable to incite as many users as possible to activate a specific product, e. g. for encouraging them to provide personal data for marketing purposes or to make them participate to a market study. In this case, control column 1010 may be included into look-up table 1000 for judging efficiency of distribution channels. Alternatively, control column 1010 may be omitted.

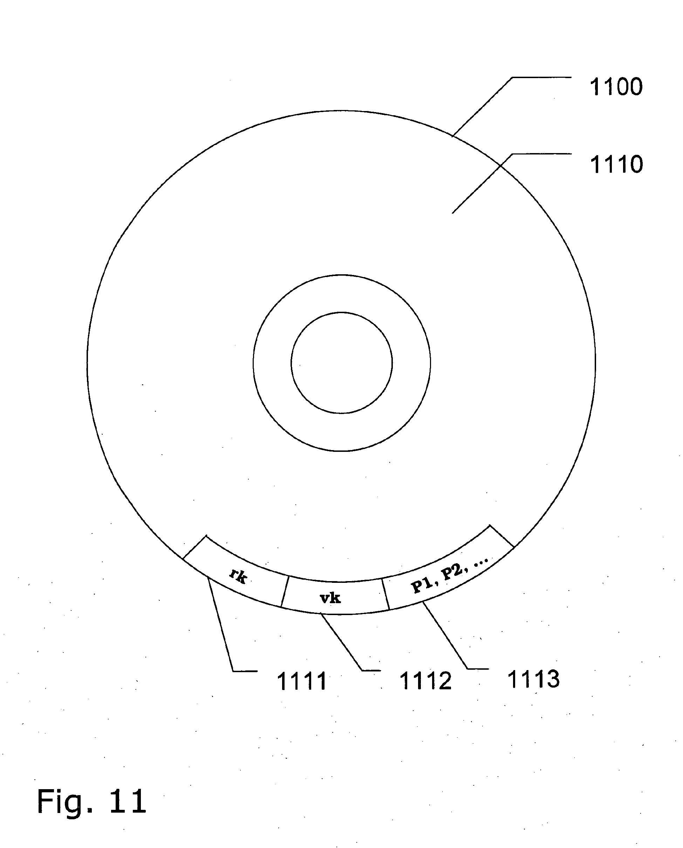

Fig. 11 illustrates a data carrier 1100 including content 1110, a request key 1111 and a verification key 1112, both stored in a machine readable format. Further, data carrier 1100 may include product identification keys 1130 which may be related to products of content 1110. Additionally, data carrier 1100 may have computer program instructions that, when loaded into a processor, cause a computer to execute the above-described method for controlling content access.

Request key 1111 and/or verification key 1112 may be stored in a copy protected manner, such that when data carrier 1100 is copied by a conventional copying device, the key which is copy protected will not be copied. Consequently, at least one of the keys will not be accessible when content access is requested for a copied image of data carrier 1100. This may ensure copy protection for conventional copying devices.

If, however, unlimited reproduction is desired, request key 1111 and verification key 1112 may not be copy protected. In this case, data carrier 1100 may be copied and distributed without limitation. This may be of interest if it is desired to incite as many users as possible to perform the activation process, thereby providing additional information that may be of interest for marketing or research interests. This may also be of interest if retrieving the activation key is only possible if a proof of payment is furnished. In this case, payment may not be required for purchasing data carrier 1100, but for activating its content or parts of it.

Once the activation key has been retrieved, it may be propagated together with data carrier 1100 or any copy of it including request key 1111 and verification key 1112. Consequently, content 1110 of data carrier 1100 may be activated an unlimited number of times without repeating retrieval of the activation key from the server. For enhancing security, it may be possible to encrypt the activation key at the time of retrieving it.

Encryption may, for example, be based on the date or time of retrieving the activation key. Alternatively or in addition, encryption may reference the user's name or Email-address, enabling to greet the user by name when access to the content of the data carrier is allowed. This may have a psychological effect preventing users from using unauthorized copies. Further, the encrypted activation code may include information determining validity of the activation code, e. g. by defining for how many days and/or how often the activation code may be used.

When matching activation key and verification key, decryption may be performed, and it may be checked whether the activation key has been generated the same day or within a limited period of time preceding the moment of matching. Thus, it is possible to generate an activation key that expires after a predetermined period of time, thereby prohibiting circulation of the activation key without time limit.

Since request key 1111 and verification key 1112 are assigned to data carrier 1100 and are independent of any hardware component of the system in which activation is performed, it is possible to retrieve the activation key without providing any data related to hardware components. Consequently, the right of accessing content 1110 is bound to data carrier 1100 and not to the system in which the method is performed or to any of its hardware components. As a consequence, even if any of the hardware components or the system changes, there will be no influence on content access to data carrier 1100.

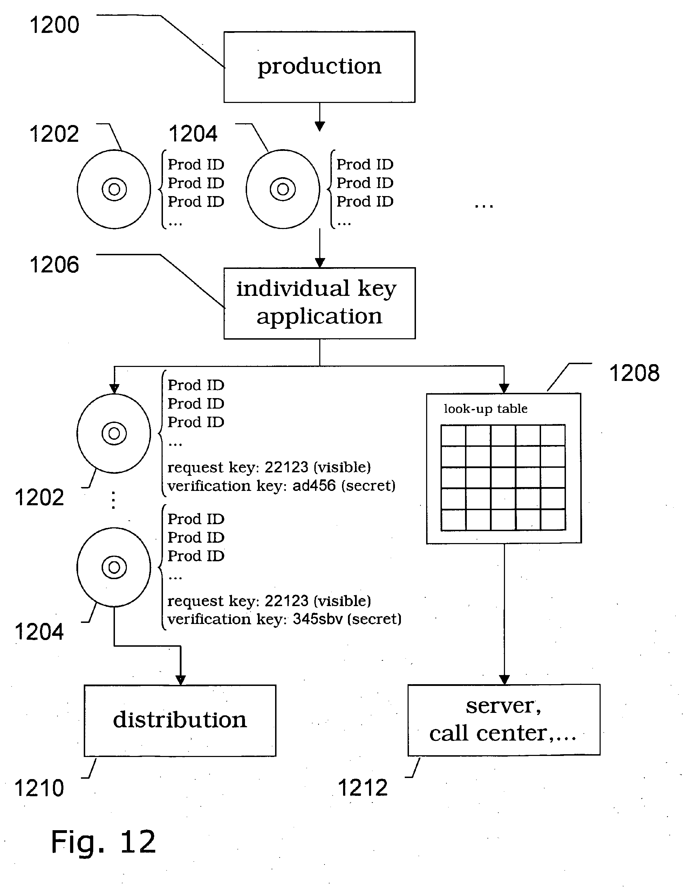

In Fig. 12, an embodiment of a production process for fabricating data carriers according to the above-described method is illustrated.

At 1200, production of data carriers 1202, 1204, ... takes place. Within this process, all data carriers 1202, 1204, ... may be produced by using a unique master. Moreover, product keys related to products included in the content may by applied.

At 1206, a process of individual key application may be performed, thereby applying the request key and the verification key to data carriers 1202, 1204, ... in a machine readable format.

The request key and/or verification key may be uniquely assigned to data carriers 1202, 1204, ... , thereby enhancing security and copy protection as described in the above.

Alternatively, e. g. for saving application costs, storage on data carriers 1202, 1204, ... or storage within a look-up table 1208 for associating the keys, the same request key and the verification key may be assigned to a predetermined number of data carriers. This allows usage of shorter key strings even if a large number of data carriers is to be provided with keys. In this case, several data carriers 1202, 1204, ... may include the same pair of request and verification key, and will consequently retrieve the same activation key from the server. Therefore, the number of times of activation should be less restrictive and it may be that the number of times of activation is not limited at all in this embodiment. Therefore, this embodiment may be suited for low security demands.

As mentioned above, the request key and the verification key may be applied in copy protected or unprotected manner, in accordance with security or distribution demands. It is further possible to store the request key visibly, e.g. such that it can be read and displayed to a user by a conventional reading device using conventional software. The verification key, however, may be applied such that it remains secret when the user tries to get access to the verification key.

When performing individual key application 1206, assignment of the request key and the verification key applied to the same data carrier 1202, 1204, ... is stored for a later use, e. g. when the activation key is to be retrieved. For this purpose, the request key and verification key applied to a single one the data carriers 1202, 1204, ... may be stored in association with each other in look-up table 1208.

At 1210, the data carriers may be forwarded for distribution.

At 1212, the look-up table 1208 may be stored or forwarded for later use during product activation within the server.

It is to be noted that the processes and steps illustrated in Fig. 12 may be performed in an arbitrary sequence.

Although specific embodiments have been illustrated and described herein, it will be appreciated by those of skilled in the art that a variety of alternate and/or equivalent implementations may be substituted for the specific embodiments shown and described without departing from the scope of the present invention. This application is intended to cover any adaptations or variations of the specific embodiments discussed herein. Therefore, it is intended that this invention be limited only by the claims and the equivalents thereof.

## Claims

1. Method for controlling access to a content stored on a data carrier, comprising:
reading a first key and a second key stored on the data carrier, said first and second keys being machine readable keys;
retrieving a third key from a remote server based on the first key;
allowing access to the content only if the second key has a predetermined relationship with the third key.

2. Method according to claim 1, wherein the first key and/or the second key are uniquely assigned to the data carrier.

3. Method according to claim 1 or 2, wherein the server comprises a look-up table in which the first and third key are stored and uniquely assigned to each other.

4. Method according to any of the preceding claims, wherein the third key is retrievable only a predetermined number of times.

5. Method according to any of the preceding claims, wherein allowing access to the content comprises transforming the content into interpretable and/or executable data.

6. Method according to any of the preceding claims, wherein the server requests additional information as a prerequisite for retrieving the third key.

7. Method according to any of the preceding claims,
wherein the third key is retrieved based on a product identification key comprised within the data carrier, and
wherein only access to a part of the content is allowed, the part being associated with the product identification key.

8. Method according to any of the preceding claims, wherein the first key and the second key are stored in a copy protected manner.

9. Method according to any of claims 1 to 7, wherein the first key and the second key are not copy protected.

10. Method according to any of the preceding claims, wherein the server encrypts the third key based on the time of retrieving the third key, based on an identifier identifying a user who is retrieving the third key and/or based on a period of time during which the third key is valid.

11. Method according to any of the preceding claims, wherein the first key and/or the second key are assigned to a predetermined number of data carriers.

12. Method according to any of the preceding claims, wherein no data related to hardware components of a system on which the method is performed is used as a basis for retrieving the third key.

13. System, comprising:
a server, comprising:
a look-up table in which a first and a third key are stored and uniquely assigned to each other;
a client, comprising:
a reading mechanism for reading the first key, a second key and a content stored on a data carrier;
a sending/receiving mechanism configured to send the first key to the server and to receive the third key from the server;
a data processor configured to allow access to the content only if the second key matches the third key.

14. Data carrier, comprising:
a content;
a first and a second key uniquely assigned to the data carrier, the first and second key being machine readable keys;
computer program instructions that cause a computer to execute a method for copy protection, comprising:
reading the first key;
retrieving a third key from a remote server based on the first key;
allowing access to the content only if the third key matches the second key.

15. Computer program product comprising a program code, which when loaded into a processor is configured to perform a method according to any of claims 1 to 12.

## Amended claims

### Amended claims in accordance with Rule 137(2) EPC.

**1.** Method for controlling access to a content (1110) stored on a data carrier (1100), comprising:
reading a first key (1111) and a second key (1112) stored on the data carrier (1100), said first and second keys being machine readable keys;
retrieving a third key from a remote server (814) based on the first key (1100) and independently of the second key (1112); and
allowing access to the content (1110) only if the second key (1112) has a predetermined relationship with the third key; **characterized in that**
the first key (1110) and/or the second key (1112) are uniquely assigned to the data carrier (1100).

**2.** Method according to claim 1, wherein the server (814) comprises a look-up table (1000) in which the first (1004) and third key (1006) are stored and uniquely assigned to each other.

**3.** Method according to any of the preceding claims, wherein the third key (1006) is retrievable only a predetermined number of times.

**4.** Method according to any of the preceding claims, wherein allowing access to the content (1110) comprises transforming the content into interpretable and/or executable data.

**5.** Method according to any of the preceding claims, wherein the server (814) requests additional information (1008) as a prerequisite for retrieving the third key (1006).

**6.** Method according to any of the preceding claims,
wherein the third key (1006) is retrieved based on a product identification key (1002, 1113) comprised within the data carrier (1100), and
wherein only access to a part of the content (1110) is allowed, the part being associated with the product identification key (1002. 1113).

**7.** Method according to any of the preceding claims, wherein the first key (1111) and the second key (1112) are stored in a copy protected manner.

**8.** Method according to any of claims 1 to 6. wherein the first key (1111) and the second key (1112) are not copy protected.

**9.** Method according to any of the preceding claims, wherein the server (814) encrypts the third key based on the time of retrieving the third key, based on an identifier identifying a user who is retrieving the third key and/or based on a period of time during which the third key is valid.

**10.** Method according to any of the preceding claims, wherein the first key (1111) and/or the second key (1112) are assigned to a predetermined number of data carriers (1100).

**11.** Method according to any of the preceding claims, wherein no data related to hardware components of a system (800) on which the method is performed is used as a basis for retrieving the third key.

**12.** System, comprising:
a server (910), comprising:
a look-up table (1000) in which a first and a third key are stored and uniquely assigned to each other;
a client (900), comprising:
a reading mechanism (902) for reading the first key (1111), a second key (1112) and a content (1110) stored on a data carrier;
a sending/receiving mechanism (908) configured to send the first key (1111) to the server (910) and to receive the third key from the server (910):
a data processor (906)configured to allow access to the content (1110) only if the second key (1112) matches the third key.

**13.** Data carrier (1100), comprising:
a content (1110);
a first and a second key (1111, 1112) uniquely assigned to the data carrier (1100), the first and second key being machine readable keys;
computer program instructions that cause a computer to execute a method for copy protection, comprising:
reading the first key (1111);
retrieving a third key from a remote server (814) based on the first key (1111) and independently of the second key (1112);
allowing access to the content only if the third key matches the second key.

**14.** Computer program product comprising a program code, which when loaded into a processor (906) is configured to perform a method according to any of claims 1 to 11.
